# EUROPEAN PATENT SPECIFICATION

(11) **EP 2 449 743 B1**
(45) Date of publication and mention of the grant of the patent: **07.09.2016**
(21) Application number: 09780154.2
(22) Date of filing: 03.07.2009
(51) Int. Cl.: H04L 29/06

(54) **METHOD AND APPARATUS FOR USE IN AN IP MULTIMEDIA SUBSYSTEM**
VERFAHREN UND VORRICHTUNG ZUR VERWENDUNG IN EINEM IP-MULTIMEDIA-SUBSYSTEM
PROCÉDÉ ET APPAREIL DESTINÉS À ÊTRE UTILISÉS DANS UN SOUS-SYSTÈME MULTIMÉDIA IP

(43) Date of publication of application: 09.05.2012
(73) Proprietor: Telefonaktiebolaget LM Ericsson (publ), 164 83 Stockholm (SE)
(72) Inventor: KHAN, David, 16871 Bromma (SE); FORSMAN, Timo, S-191 48 SOLLENTUNA (SE); JONSSON, Annika Gerd Helena, S-128 33 Skarpnäck (SE)
(74) Representative: Burchardi, Thomas
(86) International application number: PCT/EP2009/058455
(87) International publication number: WO 2011/000439

(56) References cited:
- EP-A1- 2 066 098
- WO-A1-2008/061570
- US-A1- 2005 159 157
- US-A1- 2008 220 740
- 3GPP: "3rd Generation Partnership Project;Technical Specification Group Services and System Aspects; 3G Security;Security Architecture(3G TS 33.102 version 3.0.0)" 3GPP DRAFT; 33102300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia Antipolis; 19990805, 5 August 1999 (1999-08-05), XP050268540 [retrieved on 1999-08-05]
- BT: "Subscription Management - Draft Stage 2", 3GPP DRAFT; S5A020125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Miami; 20020303, 3 March 2002 (2002-03-03), XP050293863, [retrieved on 2002-03-03]

## Description

### Technical field

The present invention relates to a method and apparatus for use in an IP Multimedia Subsystem.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.228 V5.8.0 (2004-03).

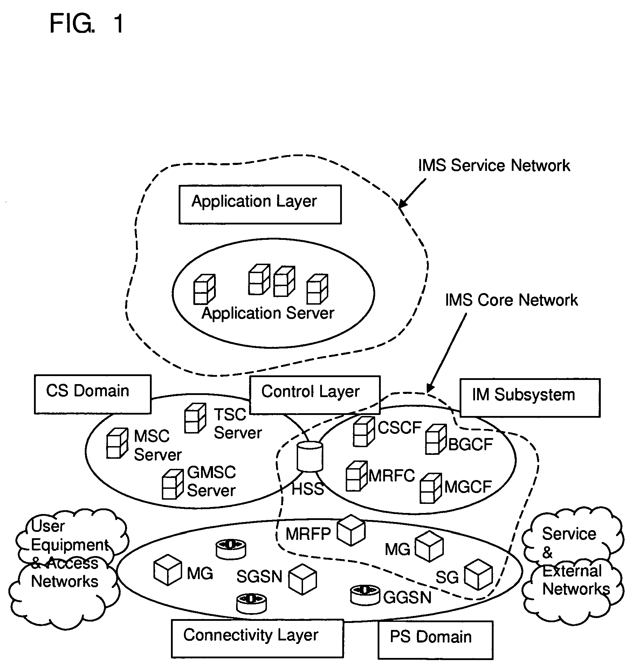

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. During the registration process, it is the responsibility of the I-CSCF to select a S-CSCF if a S-CSCF is not already selected. The I-CSCF receives the required S-CSCF capabilities from the home network's Home Subscriber Server (HSS), and selects an appropriate S-CSCF based on the received capabilities. It is noted that the allocation of an S-CSCF is key to controlling (and charging for) user access to IMS-based services.

When a registered user subsequently sends a session request to the IMS, the P-CSCF is able to forward the request to the selected S-CSCF based on information received from the S-CSCF during the registration process.

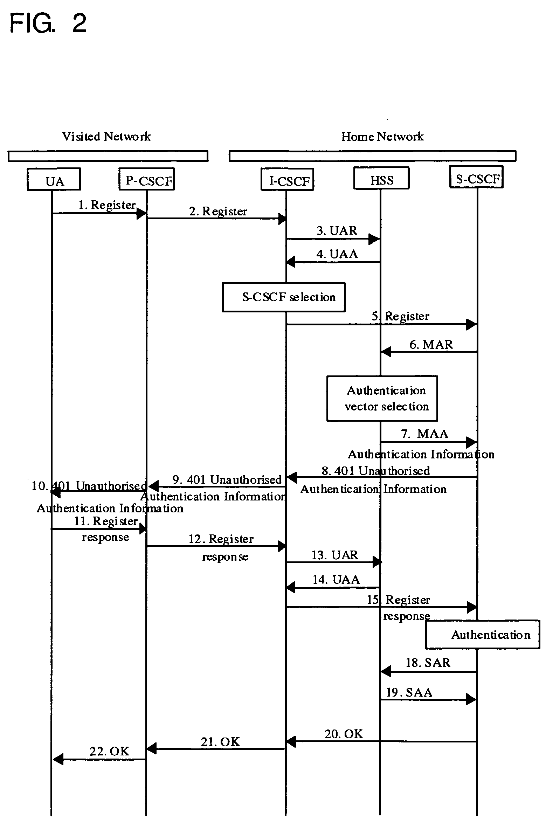

There are multiple standards in 3GPP describing how the authentication should be handled in IMS, such as TS 24.229, TS 29.228, TS 29.229 and TS 33.203. By way of example, Figure 2 provides an illustration of a SIP registration procedure involving a challenge-response type of authentication; this illustration is taken from TS 29.228, and discussed in detail in that document, so a detailed further explanation is not required here. In summary, when the I-CSCF of the Home Network receives the Register message 2 from the P-CSCF of the Visited Network (the P-CSCF having received a Register message 1 from the UA itself), it sends a User Authorization Request (UAR) message 3 to the HSS, to which the HSS responds with a User Authorization Answer (UAA) message 4. Once a S-CSCF has been selected, a Registration message 5 is forwarded to the selected S-CSCF. There follows a Multimedia Authentication Request (MAR) message 6 from the S-CSCF to the HSS, and the HSS responds with a Multimedia Authentication Answer (MAA) message 7 including authentication information, acting as a challenge to the UA to allow the UA to authenticate itself. The authentication information feeds back to the UA via messages 8 to 10, and in reply the UA again sends a Register message 11, but this time including a response to the challenge. Messages 12 to 14 then correspond to messages 2 to 4 respectively. The Register message 15, including challenge response, is sent from the I-CSCF to the S-CSCF, and (in this case) the S-CSCF is able to authenticate the UA, sending a Server Assignment Request (SAR) message 18 to the HSS, to which the HSS answers with a Server Assignment Answer (SAA) message 19. The procedure is finalised with OK messages 20 to 22 feeding back to the UA.

A problem arises where a malicious user sends multiple requests to the system, each requiring authentication, for example in an attempt to determine the password of another user. It is desirable to address this problem.

WO 2008/061570 relates to a method of authenticating a user, with the authentication method involving an exchange between a S-CSCF and a HSS. If the authentication process fails, then the user is blacklisted or blocked. US2005/159157 discloses a method and communication system for authentication of requests.

3GPP TS x2.140 V0.5.0 (2002-2) discloses an "administrative state" and an "operational state" which is maintained at the HSS for the purpose of locking and unlocking a user at the HSS.

### Summary

According to a first aspect of the present invention there is provided a method for use by a Serving Call Session Control Function, S-CSCF, of an IP Multimedia Subsystem, IMS, the method comprising receiving a challengeable request from a user, performing a number of failed authentication attempts of the user following receipt of the request, determining that the number of failed authentication attempts has reached a predetermined number, and characterised by, following such a determination: sending a locking signal from the S-CSCF to a Home Subscriber Service, HSS, of the IMS to indicate to the HSS that the user should be locked at the HSS, such that any request received from the user at another node of the IMS requiring an authentication challenge can be rejected with reference to the HSS, and subsequently unlocking the user in response to receipt of an unlock signal from the HSS.

In other arrangements, the method may alternatively or in addition comprise, following the determination, locking the user at the S-CSCF, such that any request received from the user at the S-CSCF requiring an authentication challenge can be rejected by the S-CSCF.

The locking signal may be carried by a Server Assignment Request, SAR, message.

The at least one such unlock signal may be carried by a Registration Termination Request, RTR, message.

The method may comprise maintaining a locking timer at the S-CSCF and at least one such unlock signal may be generated by the locking timer upon expiry of the locking timer.

Such a locking timer may also be maintained at the HSS.

Where a locking timer is maintained both at the HSS and at the S-CSCF, the method may comprise coordinating the locking timer maintained at the S-CSCF with that maintained at the HSS by use of signalling between the HSS and the S-CSCF.

According to a second aspect of the present invention there is provided an apparatus for use as or in a Serving Call Session Control Function, S-CSCF, of an IP Multimedia Subsystem, IMS, comprising means for receiving a challengeable request from a user, performing a number of failed authentication attempts of the user following receipt of the request, determining that the number of failed authentication attempts has reached a predetermined number, and characterised by, following such a determination: (a) sending a locking signal from the S-CSCF to a Home Subscriber Service, HSS, of the IMS to indicate to the HSS that the user should be locked at the HSS, such that any request received from the user at another node of the IMS requiring an authentication challenge can be rejected with reference to the HSS, and subsequently unlocking the user in response to receipt of an unlock signal from the HSS.

In other arrangements, the means may alternatively or in addition be for, following the determination, locking the user at the S-CSCF, such that any request received from the user at the S-CSCF requiring an authentication challenge can be rejected by the S-CSCF.

According to a third aspect of the present invention there is provided a program for controlling an apparatus to perform a method according to the first aspect of the present invention or which, when loaded into an apparatus, causes the apparatus to become an apparatus according to the second aspect of the present invention. The program may be carried on a carrier medium. The carrier medium may be a storage medium. The carrier medium may be a transmission medium.

According to a fourth aspect of the present invention there is provided an apparatus programmed by a program according to the third aspect of the present invention.

According to a fifth aspect of the present invention there is provided a storage medium containing a program according to the third aspect of the present invention.

An embodiment of the present invention offers a technical advantage of addressing the issue mentioned above relating to the prior art. Technical advantages are set out in more detail below.

### Brief description of the drawings

Figure 1, discussed hereinbefore, illustrates schematically the integration of an IP Multimedia Subsystem into a 3G mobile communications system;
Figure 2, also discussed hereinbefore, illustrates a known message flow, taken from TS 29.228, in the case where a user registers with the IMS;
Figure 3 is a flowchart illustrating steps performed by a S-CSCF in an embodiment of a first aspect of the present invention;
Figure 4 is a flowchart illustrating steps performed by a S-CSCF in an embodiment of a second aspect of the present invention;
Figure 5 is a flowchart illustrating steps performed by an HSS in the second aspect embodiment;
Figure 6 is a flowchart illustrating steps performed either by an HSS or by a S-CSCF, or a combination of both, in the second aspect embodiment;
Figure 7 is an illustration of a concept embodying the present invention which unites the first and second aspects;
Figure 8 is an illustrative block diagram showing components of an S-CSCF according to an embodiment of the present invention; and
Figure 9 is an illustrative block diagram showing components of an HSS according to an embodiment of the present invention.

### Detailed description

An embodiment of the present invention aims to address a problem mentioned above, which arises where a malicious user sends multiple requests to the system, each requiring authentication, for example in an attempt to determine the password of another user.

It has been previously proposed that a locking mechanism of some sort is provided in the S-CSCF, and where the authentication of the user is performed in the S-CSCF, this locking mechanism could be used in a situation where the S-CSCF receives multiple authentication requests with the wrong password. The S-CSCF would have a counter that counts the number of failed registration attempts for a specific user. When the number of failed attempts is equal to a certain value in the S-CSCF, the user would be locked out for a certain amount of time. During that time, all registrations for that user would be rejected by the S-CSCF. The locking would be cleared after a certain time.

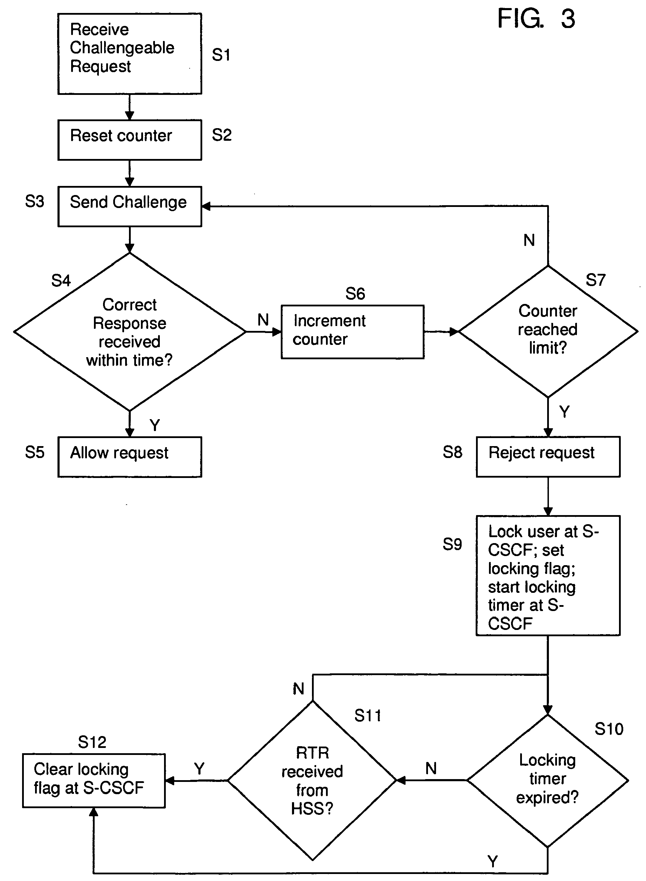

As an alternative, or in addition, the locking could also be cleared if the S-CSCF receives an administrative Registration Termination Request (RTR) for the user from the HSS, for example if the user has called operator customer support for help. Such a scheme is illustrated in Figure 3, and represents an embodiment of a first aspect of the present invention. Figure 3 is from the point of view of the S-CSCF.

In step S1 of Figure 3, a challengeable request is received from a user (such as a Register request, or any other type of request where the S-CSCF has a local policy or configuration to challenge the request). A counter is reset in step S2. In step S3 a challenge is sent to the user. In step S4 it is determined whether a correct response to the challenge has been received within a predetermined time. If yes, then the request received in step S1 is allowed and processing proceeds as normal (represented by step S5). If not, then processing proceeds to step S6, in which the counter is incremented. If it is determined in step S7 that the counter has not yet reached a predetermined limit, then processing returns to step S3, where a fresh challenge is sent. If it is determined in step S7 that the counter has reached the predetermined limit, then the request received in step S1 is rejected in step S8 and processing proceeds to step S9.

In step S9, a locking flag is set to indicate that the user is locked out, and a locking timer is started. While the locking flag is set, no further challengeable requests from the user will be answered. For example, new attempts at registering would be rejected at the S-CSCF. If the user already has a valid registration, traffic to this user could be forwarded as in normal registered case, and traffic from this user that does not require a challenge could also forwarded; however, since the user is locked, no more challenges would be allowed and therefore traffic from this user that requires a challenge would be rejected. In the case where the user is not registered, since no user profile has yet been downloaded, a "fake" or minimum user profile could be associated with the locking flag; this is an implementation detail that is not important to the underlying concept.

In step S10 it is determined whether the locking timer has expired; if so then processing proceeds to step S12 where the locking flag is cleared, so that challengeable requests from the user can again be answered. The determination in step S10 can be made by waiting for an unlock signal to be received by the locking timer, with the locking timer sending such an unlock signal when it expires; step S10 could therefore be considered as a step of determining if such an unlock signal has been received.

If the determination in step S10 is that the locking timer has not yet expired, it is then determined in step S11 whether a Registration Termination Request (RTR) message has been received from the HSS; this RTR message can be considered to be or to carry an unlock signal. This allows an additional way in which the locking flag can be cleared, because if a RTR message has been received then processing proceeds to step S12 where the locking flag is cleared, so that challengeable requests from the user can again be answered. If step S11 determines that a RTR message has not been received, then processing loops back to step S10.

It is also to be noted that, in the case where the user is already registered, the locking flag in the S-CSCF could also be cleared when the registration timer expires (in much the same way as when an RTR message is received as described above). It could be that the locking timer has precedence over the registration timer, so that even if the registration timer expires, locking would remain in place until the locking timer expires.

The scheme presented in Figure 3 has a major advantage from an operator perspective over previously-considered methods, since it allows the operator to control the unlocking of the user conveniently from the HSS, where the user is provisioned, rather than doing it in the S-CSCF. It is also not essential that an RTR message is used to indicate to the S-CSCF to unlock the user; and other type of suitable message could be used; for example, a Push Profile Request (PPR) message could be used by the HSS to inform the S-CSCF to change state to "unlocked".

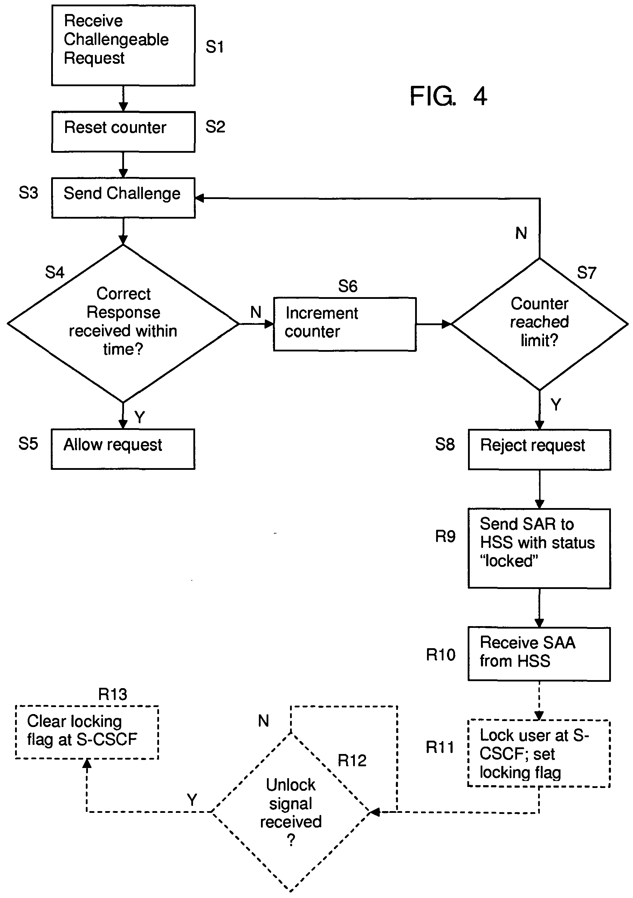

In the first aspect of the present invention, locking is provided only at the S-CSCF (although it can be controlled from the HSS). In an embodiment of a second aspect of the present invention, locking is provided at least partly at the HSS, as will now be described with reference to Figures 4 to 6.

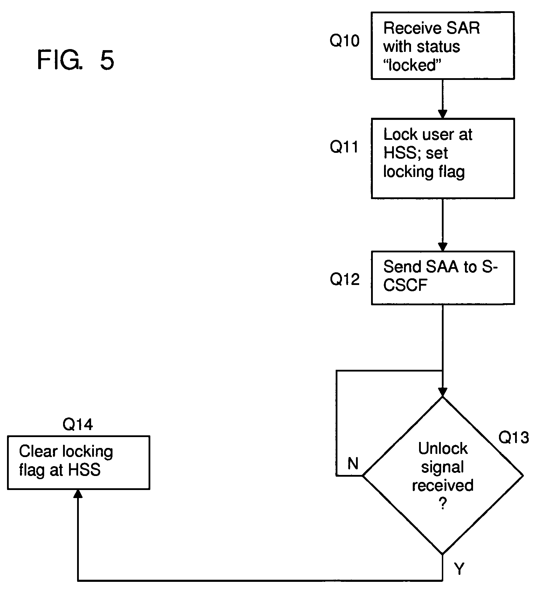

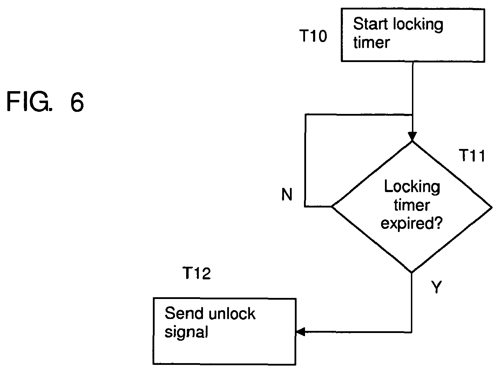

Figure 4 is a flowchart illustrating steps performed at the S-CSCF, while Figure 5 is a flowchart illustrating steps performed at the HSS. Figure 6 is a flowchart illustrating steps that can be performed either at the S-CSCF, or at the HSS, or a combination of both.

Steps S1 to S8 of Figure 4 are equivalent to those shown in Figure 3, and a further description of these steps is not required. After it has been determined in step S7 that the counter has reached the predetermined limit and the request has been rejected in step S8, and in contrast to the scheme described with reference to Figure 3, in the present embodiment the S-CSCF initiates locking of the user *at the HSS* by sending a SAR message in step R9 to the HSS with a status of "locked"; the SAR message can be considered to carry a locking signal. In a case where the user is not yet registered (for example where the request received in step S1 is an Initial Register request), the SAR message might have a status of "de-registered and locked", whereas where the user is already registered, the SAR message might have a status of "registered and locked".

Referring to Figure 5, the SAR message is received at the HSS in step Q10, and in view of the status of "locked", the HSS sets a locking flag in step Q11 to indicate that the user is locked. A SAA message is sent by the HSS in step Q12, and received by the S-CSCF in step R10 (see Figure 4).

As in the Figure 3 embodiment, a locking timer is used in this embodiment to keep track of when the user should be unlocked. Unlike in the Figure 3 embodiment, the locking timer in this embodiment can be employed either at the HSS or at the S-CSCF, or a combination of the two, with signalling between the HSS and S-CSCF if necessary. For example, a locking timer could be provided only at the HSS, with signalling from the HSS to the S-CSCF to indicate the status of the locking timer (for example, to indicate that the locking timer has expired). Or, a locking timer could be provided in both the HSS and S-CSCF, coordinated by signalling between the HSS and S-CSCF (for example, the SAA message sent from the HSS in step Q12 could include locking information, used by the S-CSCF to synchronise its own locking timer to that in the HSS).

Figure 6 is an illustrative flowchart showing a locking timer being started in step T10, and a check being made in step T11 as to whether the locking timer has expired. If it has not expired, processing remains at step T11. If it has expired, an unlock signal (clear locking flag signal) is sent.

The HSS loops around step Q13, checking for this unlock signal; when it is received, processing continues to step Q14, where the locking flag at the HSS is cleared to indicate that the user is unlocked.

If the user is already registered (as opposed to a situation where step S1 relates to an Initial Register request), a locking flag may also be set at the S-CSCF following step S8, with the user then being locked both at the S-CSCF and the HSS. Steps R11 to R13 show the extra steps performed at the S-CSCF, and these correspond closely to steps Q11, Q13 and Q14 respectively. Where a lock is placed on the user at the S-CSCF, in addition to checking for expiry of a locking timer as illustrated, it will be appreciated that the various other ways of terminating the lock at the S-CSCF can also be employed, such as those described above with reference to Figure 3; for example, the user may be unlocked at the S-CSCF upon receipt of an RTR message (or similar) from the HSS.

During the locked state, if a Register request is received at the I-CSCF from the user (message 2 of Figure 2), the I-CSCF would be informed at a very early stage (in message 4 of Figure 2) that the user is actually locked, and that the Register request should be rejected. This has a benefit over a previously-considered proposal for locking the user only at the S-CSCF, because it is only possible in that proposal to reject the Register request at a later stage, when the Request has reached the S-CSCF at which the locking flag is kept. Another benefit is that, because a locking flag is maintained at the HSS, the locking applies to all S-CSCFs and not only the one where the registration happened to end up (i.e. where the locking flag would be kept in the other scheme).

Where the user is not registered (for example where the request received in step S1 is an Initial Register request), traffic to the user in the locked state would be handled in the normal "not registered/unregistered" manner.

Where the user is already registered, traffic to the user would be forwarded as in normal registered case (the HSS would send the S-CSCF name to the I-CSCF, and the S-CSCF would proxy terminating requests). Traffic from this user that does not require a challenge is also forwarded. However, since the user is locked, no more challenges would be allowed and therefore traffic from this user that requires a challenge would be rejected by the S-CSCF (for requests other than Register requests).

Where the request in step S1 is a register request, it is likely that a locking flag would only be maintained at the HSS, and not also the S-CSCF. In this case, the HSS would not actually be required to inform the S-CSCF that the locking has expired. The next Register request that is received at the I-CSCF from the user will be successful, owing to the fact that the HSS will allow it because the locking flag for that user, as maintained at the HSS, would be clear. A further benefit is that the S-CSCF does not have to store locking information for any unregistered users, because this locking information can be stored centrally at the HSS.

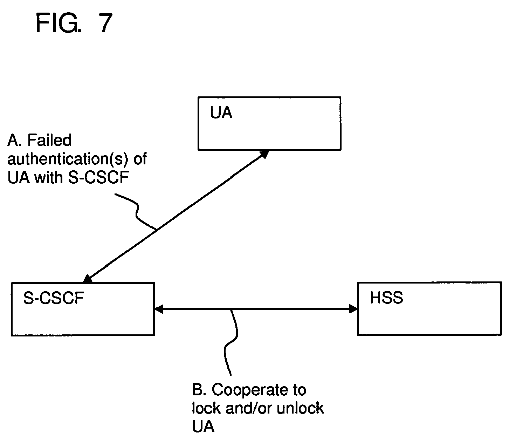

The first aspect of the present invention described above can be seen as a method in which a Serving Call Session Control Function cooperates with a Home Subscriber Server to unlock a user after that user has been locked following a predetermined number of failed authentications of the user at the S-CSCF. The second aspect of the present invention described above can be seen as a method in which a Serving Call Session Control Function cooperates with a Home Subscriber Server to lock a user following a predetermined number of failed authentications of the user at the S-CSCF. In both aspects, any request received from the user at a node of the IMS where the lock is in effect and requiring an authentication challenge is caused by the node to be rejected. Therefore, what unites the first and second aspects of the present invention is a method for use in an IMS in which a S-CSCF of the IMS cooperates with a HSS of the IMS to lock a user following a predetermined number of failed authentications of the user at the S-CSCF and/or unlock that user thereafter, with any request received from the user at a node of the IMS where the lock is in effect and requiring an authentication challenge being caused by the node to be rejected. This is illustrated schematically in Figure 7, where step A represents a predetermined number of failed authentications of the User Agent (UA) at the S-CSCF, and step B represents cooperation between then S-CSCF and HSS to lock and/or unlock the UA.

It will be appreciated respective components are provided for performing the various steps illustrated in the flowcharts shown in Figures 3 to 6 and described above. Each of the flowcharts can therefore also be interpreted as showing a plurality of components for performing those respective functions.

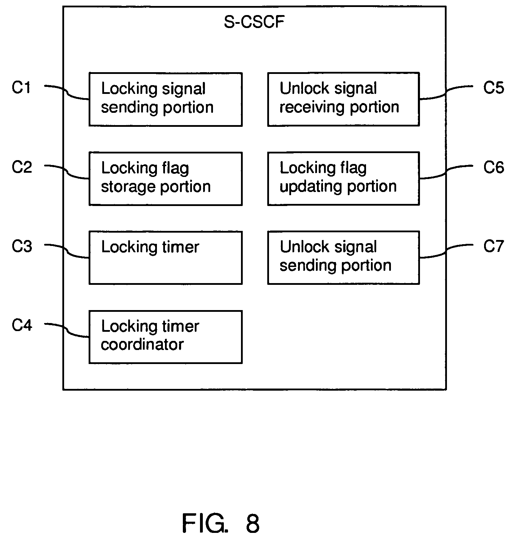

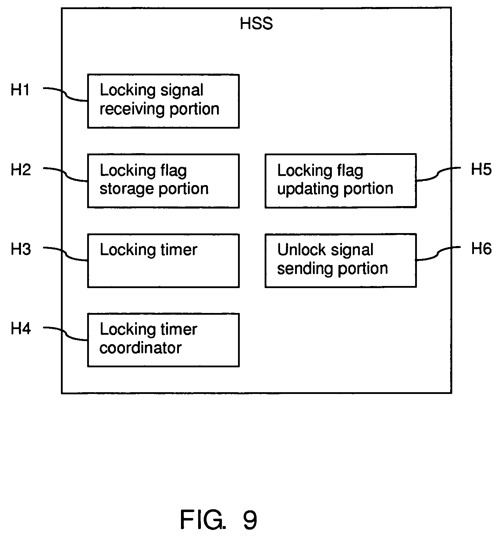

Figures 8 and 9 are illustrative block diagrams showing some of these components more explicitly. Figure 8 illustrates components of the S-CSCF, while Figure 9 illustrates components of the HSS. It will be appreciated that not all of the illustrated components are essential in all embodiments. The S-CSCF comprises: a locking signal sending portion C1 for performing step R9; a locking flag storage portion C2 for use in any of steps S9, S12, R11 and R13; a locking timer C3 for use in any of steps S9, S10, T10 and T11; a locking timer coordinator C4 for use in sending/receiving signalling for coordinating the locking timer C3 with another locking timer located in the HSS (see H3 of Figure 9, described below), for example for performing step R10; an unlock signal receiving portion C5 for use in any of steps R12, S11 and S10; a locking flag updating portion C6 for use in any of steps S9, S12, R11 and R13; and an unlock signal sending portion C7 for performing step T12.

The HSS comprises: a locking signal receiving portion H1 for performing step Q10; a locking flag storage portion H2 for use in any of steps Q11 and Q14; a locking timer H3 for use in any of steps T10 and T11; a locking timer coordinator H4 for use in sending/receiving signalling for coordinating the locking timer H3 with another locking timer located in the S-CSCF (see C3 of Figure 8, described above), for example for performing step Q12; a locking flag updating portion H5 for use in any of steps Q11 and Q14; and an unlock signal sending portion H6 for forming step T12, and/or in a step performed by the HSS to send the unlock signal received by the S-CSCF in step S11.

It will also be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims. For example, although the description focuses on digest authentication, the present invention is also applicable to other types of authentication, e.g. Authentication and Key Agreement (AKA) authentication; digest is used merely as an example.

## Claims

1. A method for use by a Serving Call Session Control Function, S-CSCF, of an IP Multimedia Subsystem, IMS, the method comprising receiving (S1) a challengeable request from a user, performing (S3, S4, S6) a number of failed authentication attempts of the user following receipt of the request, determining (S7) that the number of failed authentication attempts has reached a predetermined number, and **characterised by**, following such a determination: sending a locking signal from the S-CSCF to a Home Subscriber Service, HSS, of the IMS to indicate to the HSS that the user should be locked at the HSS, such that any request received from the user at another node of the IMS requiring an authentication challenge can be rejected with reference to the HSS, and subsequently unlocking the user in response to receipt of an unlock signal from the HSS.

2. A method as claimed in claim 1, wherein the locking signal is carried by a Server Assignment Request, SAR, message.

3. A method as claimed in claim 1 or 2, wherein the unlock signal is carried by a Registration Termination Request, RTR, message.

4. A method as claimed in claim 1, 2 or 3, comprising maintaining a locking timer at the S-CSCF and wherein at least one such unlock signal is generated by the locking timer upon expiry of the locking timer.

5. A method as claimed in claim 4, wherein such a locking timer is also maintained at the HSS, and comprising coordinating the locking timer maintained at the S-CSCF with that maintained at the HSS by use of signalling between the HSS and the S-CSCF.

6. An apparatus for use as or in a Serving Call Session Control Function, S-CSCF, of an IP Multimedia Subsystem, IMS, comprising means for receiving (S1) a challengeable request from a user, performing (S3, S4, S6) a number of failed authentication attempts of the user following receipt of the request, determining (S7) that the number of failed authentication attempts has reached a predetermined number, and **characterised by**, following such a determination: sending a locking signal from the S-CSCF to a Home Subscriber Service, HSS, of the IMS to indicate to the HSS that the user should be locked at the HSS, such that any request received from the user at another node of the IMS requiring an authentication challenge can be rejected with reference to the HSS, and subsequently unlocking the user in response to receipt of an unlock signal from the HSS.

7. A program comprising computer executable instructions which, when executed by a computer, cause the computer to carry out the steps of the method as claimed in any one of claims 1 to 5.

8. A storage medium containing a program as claimed in claim 7.

## Patentansprüche

1. Verfahren zur Verwendung durch eine versorgende Rufsitzungssteuerfunktion, S-CSCF, eines IP-Multimedia-Subsystems, IMS, wobei das Verfahren umfasst: Empfangen (S1) einer abfragbaren Anforderung von einem Benutzer, Durchführen (S3, S4, S6) einer Anzahl von fehlgeschlagenen Authentisierungsversuchen des Benutzers nach Empfang der Anforderung, Bestimmen (S7), dass die Anzahl von fehlgeschlagenen Authentisierungsversuchen eine vorbestimmte Anzahl erreicht hat, und gekennzeichnet nach solch einer Bestimmung durch: Senden eines Sperrsignals von der S-CSCF an einen Heimat-Teilnehmerdienst, HSS, des IMS, um dem HSS anzuzeigen, dass der Benutzer am HSS gesperrt werden sollte, derart dass jegliche Anforderung, die vom Benutzer an einem anderen Knoten des IMS empfangen wird und eine Authentisierungsabfrage erfordert, unter Bezugnahme auf den HSS zurückgewiesen werden kann, und anschließendes Entsperren des Benutzers in Reaktion auf den Empfang eines Entsperrungssignals vom HSS.

2. Verfahren nach Anspruch 1, wobei das Sperrsignal durch eine Serverzuordnungsanforderungs, SAR,-Nachricht übertragen wird.

3. Verfahren nach Anspruch 1 oder 2, wobei das Sperrsignal durch eine Registrierungslöschungsanforderungs, RTR,-Nachricht übertragen wird.

4. Verfahren nach Anspruch 1, 2 oder 3, umfassend ein Unterhalten eines Sperrzeitgebers an der S-CSCF, und wobei das mindestens eine solche Entsperrungssignal durch den Sperrzeitgeber bei Ablauf des Sperrzeitgebers erzeugt wird.

5. Verfahren nach Anspruch 4, wobei solch ein Sperrzeitgeber auch am HSS unterhalten wird, und umfassend ein Koordinieren des Sperrzeitgebers, der an der S-CSCF unterhalten wird, mit dem, der am HSS unterhalten wird, durch Verwenden von Signalisierung zwischen dem HSS und der S-CSCF.

6. Vorrichtung zur Verwendung als eine versorgende Rufsitzungssteuerfunktion, S-CSCF, eines IP-Multimedia-Subsystems, IMS, oder in einer solchen, umfassend Mittel zum Empfangen (S1) einer Anforderung von einem Benutzer, Durchführen (S3, S4, S6) einer Anzahl von fehlgeschlagenen Authentisierungsversuchen des Benutzers nach Empfang der Anforderung, Bestimmen (S7), dass die Anzahl von fehlgeschlagenen Authentisierungsversuchen eine vorbestimmte Anzahl erreicht hat, und gekennzeichnet nach solch einer Bestimmung durch: Senden eines Sperrsignals von der S-CSCF an einen Heimat-Teilnehmerdienst, HSS, des IMS, um dem HSS anzuzeigen, dass der Benutzer am HSS gesperrt werden sollte, derart dass jegliche Anforderung, die vom Benutzer an einem anderen Knoten des IMS empfangen wird und eine Authentisierungsabfrage erfordert, unter Bezugnahme auf den HSS zurückgewiesen werden kann, und anschließendes Entsperren des Benutzers in Reaktion auf den Empfang eines Entsperrungssignals vom HSS.

7. Programm, umfassend computerausführbare Anweisungen, die bei Ausführung durch einen Computer den Computer veranlassen, die Schritte des Verfahrens nach einem der Ansprüche 1 bis 5 auszuführen.

8. Speichermedium, das ein Programm nach Anspruch 7 enthält.

## Revendications

1. Procédé destiné à être utilisé par une fonction de commande de session d'appel de desserte, S-CSCF, d'un sous-système multimédia IP, IMS, le procédé comprenant la réception (S1) d'une demande pouvant faire l'objet d'un défi en provenance d'un utilisateur, l'exécution (S3, S4, S6) d'un nombre de tentatives d'authentification ayant échoué de l'utilisateur à la suite de la réception de la demande, la détermination (S7) que le nombre de tentatives d'authentification ayant échoué a atteint un nombre prédéterminé, et **caractérisé par**, à la suite d'une telle détermination : l'envoi d'un signal de verrouillage de la S-CSCF à un service d'abonné de rattachement, HSS, de l'IMS pour indiquer au HSS que l'utilisateur doit être verrouillé au HSS, de sorte que toute demande reçue en provenance de l'utilisateur à un autre noeud de l'IMS nécessitant un défi d'authentification puisse être rejetée en référence au HSS, puis le déverrouillage de l'utilisateur en réponse à la réception d'un signal de déverrouillage en provenance du HSS.

2. Procédé selon la revendication 1, dans lequel le signal de verrouillage est porté par un message de demande d'assignation de serveur, SAR.

3. Procédé selon la revendication 1 ou 2, dans lequel le signal de déverrouillage est porté par un message de demande de terminaison d'enregistrement, RTR.

4. Procédé selon la revendication 1, 2 ou 3, comprenant le maintien d'une minuterie de verrouillage à la S-CSCF et dans lequel au moins un tel signal de déverrouillage est généré par la minuterie de verrouillage à l'expiration de la minuterie de verrouillage.

5. Procédé selon la revendication 4, dans lequel une telle minuterie de verrouillage est également maintenue au HSS, et comprenant la coordination de la minuterie de verrouillage maintenue à la S-CSCF avec celle maintenue au HSS par l'utilisation d'une signalisation entre le HSS et la S-CSCF.

6. Appareil destiné à être utilisé par une fonction de commande de session d'appel de desserte, S-CSCF, d'un sous-système multimédia IP, IMS, comprenant des moyens pour effectuer la réception (S1) d'une demande pouvant faire l'objet d'un défi en provenance d'un utilisateur, l'exécution (S3, S4, S6) d'un nombre de tentatives d'authentification ayant échoué de l'utilisateur à la suite de la réception de la demande, la détermination (S7) que le nombre de tentatives d'authentification ayant échoué a atteint un nombre prédéterminé, et **caractérisé par**, à la suite d'une telle détermination : l'envoi d'un signal de verrouillage de la S-CSCF à un service d'abonné de rattachement, HSS, de l'IMS pour indiquer au HSS que l'utilisateur doit être verrouillé au HSS, de sorte que toute demande reçue en provenance de l'utilisateur à un autre noeud de l'IMS nécessitant un défi d'authentification puisse être rejetée en référence au HSS, puis le déverrouillage de l'utilisateur en réponse à la réception d'un signal de déverrouillage en provenance du HSS.

7. Programme comprenant des instructions exécutables par ordinateur qui, lorsqu'elles sont exécutées par un ordinateur, amènent l'ordinateur à effectuer les étapes du procédé selon l'une quelconque des revendications 1 à 5.

8. Support de mémorisation contenant un programme selon la revendication 7.
